# FASCICULE DE BREVET EUROPEEN

(11) **EP 2 659 764 B1**
(45) Date de publication et mention de la délivrance du brevet: **12.08.2020**
(21) Numéro de dépôt: 13165972.4
(22) Date de dépôt: 30.04.2013
(51) Int. Cl.: A01G 3/037

(54) **Outil électroportatif et procédé d'assemblage d'un tel outil électroportatif**
Tragbares Elektrogerät, und Verfahren zum Zusammenbau eines solchen tragbaren Elektrogeräts
Portable electric tool and method for assembling such a portable electric tool

(30) Priorité: 04.05.2012 CH 6182012
(43) Date de publication de la demande: 06.11.2013
(73) Titulaire: Felco SA, 2206 Les Geneveys-sur-Coffrane (CH)
(72) Inventeur: Wermeille, Marc, 2087 Cornaux (CH)
(74) Mandataire: P&TS SA (AG, Ltd.)

(56) Documents cités:
- EP-A1- 0 291 431
- EP-A1- 2 158 804
- EP-A1- 2 266 388
- FR-A- 999 352

## Description

### Domaine technique

La présente invention concerne un outil électroportatif et notamment, mais pas exclusivement, un outil portatif avec un actuateur électrique alimenté à batteries pour actionner une lame, un couteau ou un autre organe mobile. La présente invention concerne également un procédé d'assemblage d'un tel outil électroportatif.

### Etat de la technique

On connait dans la technique plusieurs exemples d'outils portatif de type sécateur ou cisailles dotés d'un actionneur électrique, permettant ainsi d'alléger l'activité des opérateurs. Ces outils sont utilisés notamment dans le domaine de l'agriculture ou de la viticulture, par exemple pour des opérations de taille. Le même principe, c'est-à-dire l'intégration d'un actuateur électrique, dans un outil portatif, est également employé dans des cisailles, des pinces à sertir, des presses, et beaucoup d'autres outils utilisés en plusieurs activités industrielles, médicales ou autre.

Dans la description suivante fournie à titre d'exemple, on fera référence, par simplicité, à un sécateur. Il faut toutefois comprendre que l'invention n'est pas limitée à un tel instrument, mais inclut également tous les outils couverts par les revendications.

On utilisera également, dans la description, les indications 'antérieur', 'avant', ou 'distal', pour désigner l'extrémité de l'outil normalement la plus éloignée de l'opérateur, tandis que les termes 'postérieur', 'arrière', 'proximal', sont utilisés pour indiquer l'extrémité de l'outil plus proche de l'opérateur lors de l'usage normal. L'extrémité avant comporte en général les organes actifs de l'outil, par exemple des lames, tandis que l'extrémité arrière est munie d'une poignée permettant la saisie par l'opérateur.

Les forces en jeu dans ces outils étant considérables, il est nécessaire de lui donner une structure solide et rigide et de fixer l'actionneur, les éléments de transmission, et les lames sur un élément rigide de base, ou une série d'éléments rigidement interconnectés. Il est nécessaire également de protéger l'actionneur et autres éléments de l'outil de l'attaque de poussières, corps étrangers et liquides, et empêcher l'accès de corps étrangers. Dans la majorité des outils électroportatifs, on dispose ces éléments dans des boîtiers composés de deux demi-coques vissées, de façon à permettre le démontage et le service. Ces solutions complexes et comportant plusieurs éléments reliés mécaniquement augmentent le poids et le coût de l'outil et peuvent réduire sa rigidité.

EP0291431 décrit un sécateur comprenant un corps évidé en deux parties assemblées par vissage, suivant un plan longitudinal. Dans la partie arrière du corps est installé un moteur électrique à courant continu accouplé à un réducteur. La sortie du réducteur est accouplée à un système vis-écrou à billes, comprenant une vis à billes mobile en rotation et immobilisée en translation, et un écrou à billes mobile en translation et immobilisé en rotation. La vis tournante est accouplée à la sortie du réducteur; l'écrou mobile axialement est relié, au moyen d'un couple de biellettes, à la lame mobile. Ces biellettes sont disposées latéralement de chaque côté de l'écrou et sont assujetties, au moyen d'axes d'articulation, à un prolongement ou levier que présente la lame mobile, et au corps de l'écrou, respectivement. EP2266388 concerne un outil électroportatif comprenant un corps, un système vis-écrou à billes comprenant une vis à billes mobile en rotation et un écrou à billes mobile en translation. La vis est accouplée à la sortie du moteur; l'écrou est relié, au moyen d'une biellette, à la lame mobile de l'outil.

EP2158804 concerne un outil électroportatif à deux manches, dans lequel l'actionneur est inséré dans une ouverture postérieure du corps de l'outil. FR999352 décrit un outil électroportatif comprenant un corps cylindrique.

### Bref résumé de l'invention

Un but de la présente invention est de proposer un outil électroportatif avec une structure mécanique simple et rigide, plus simple à assembler et plus compacte que la structure des outils connus.

Selon l'invention, ces buts sont atteints notamment au moyen de l'objet de la revendication indépendante de produit, et notamment par un outil électroportatif comprenant : un corps de forme essentiellement tubulaire ; un actionneur au moins partiellement engagé dans le corps, ledit actionneur comprenant un élément de fixation solidaire du corps et un élément opératif déplaçable relativement audit organe fixe, un organe de transmission, reliant ledit élément opératif de l'actionneur à un organe mobile de l'outil.

Le corps de l'outil est formé d'une pièce intégrale métallique indémontable entourant latéralement l'actionneur. Cette pièce permet d'obtenir une solidité et une rigidité maximale de l'outil, tout en protégeant l'actionneur. En outre cette pièce est facile à usiner. Dans une variante cette pièce intégrale métallique est en aluminium forgé, ou en acier.

Une douille de fixation vissée dans le corps appuie sur la face arrière du collier, ce qui permet de bloquer solidement en place l'actionneur dans sa position. De préférence la douille est une pièce métallique, par exemple en acier, de façon à assurer un serrage sûr et protéger le moteur et l'électronique solidaire du moteur. De préférence cette douille comprend des faces permettant son serrage à l'aide d'une clé.

Dans une variante, une bague indexée est serrée entre le corps de l'outil et la douille, permettant ainsi la fixation d'un autre élément indexé sur le corps, par exemple une coque ou un capot.

Selon un aspect de l'invention, ces buts sont atteints par l'objet de la revendication indépendante de procédé, à savoir par un procédé d'assemblage d'un tel outil électroportatif. Bien que les modes de réalisations illustrés sur les figures montrent une bielle, l'invention n'est pas limité par cette caractéristique et pourrait utiliser un maillon, une articulation liée à l'écrou à billes, ou tout autres organes de liaison apte à transmettre le mouvement de l'organe opératif de l'actionneur à l'organe mobile de l'outil.

Cette solution présente notamment l'avantage par rapport à l'art antérieur de comporter un corps d'outil d'une seule pièce, extrêmement rigide et en même temps facile à usiner. L'outil comporte un nombre réduit de pièces, en sorte que l'assemblage et le désassemblage de l'outil sont faciles et rapides.

### Brève description des figures

Des exemples de mise en œuvre de l'invention sont indiqués dans la description illustrée par les figures annexées dans lesquelles :
La figure. 1 illustre une vue explosée d'un exemple d'outil électroportatif selon l'invention.
Les figures 2a et 2b montrent une étape de l'assemblage de l'outil de l'invention.
Les figures 3a et 3b illustrent l'outil assemblé en section, et un détail d'assemblage.

### Exemple(s) de mode de réalisation de l'invention

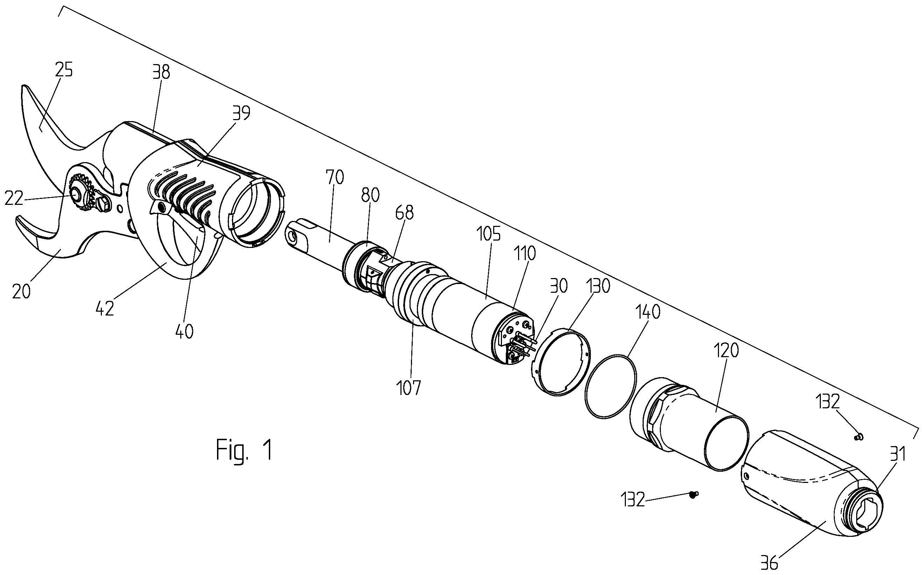

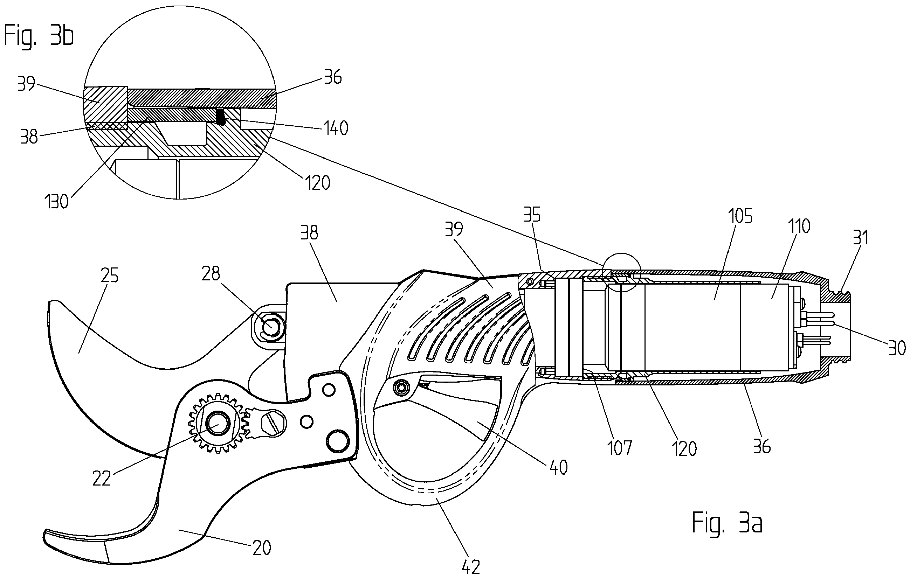

La figure 1 représente une vue explosée d'un exemple d'outil électroportatif selon l'invention. Le corps de l'outil 38 est un élément de forme essentiellement tubulaire. Préférablement il est réalisé en une seule pièce métallique intégrale, par exemple en aluminium forgé, ou en acier, afin d'obtenir une solidité et une rigidité maximale. La contre-lame 20 est fixée rigidement au corps 38, tandis que la lame 25, qui constitue l'organe mobile de l'outil, est articulée de façon à pouvoir pivoter autour de l'axe 22. Le corps 38 comporte une ouverture antérieure et une ouverture postérieure qui sont utilisées pour le passage de la bielle 70 de transmission et l'insertion de l'actionneur. Une coque de protection 39 est fixée sur le corps 38 et le couvre au moins partiellement. La coque de protection intègre également la garde 42 qui protège la gâchette 40. Elle est visible aussi, plus clairement, sur les figures 3a et 3b.

L'actionnement de l'outil est assuré préférablement par un moteur électrique de type 'brushless/sensorless' avec réducteur intégré 105. On peut toutefois utiliser, dans le cadre de l'invention, n'importe quel type de moteur, muni ou non d'un réducteur. Dans cet exemple, la sortie du réducteur est reliée directement à une vis sans fin (non visible sur les figures) qui entraîne axialement l'écrou à billes 68 sur lequel est articulée la bielle 70 agissant sur la lame mobile 25 du sécateur.

La liaison entre l'écrou à billes 68 et la bielle 70 peut être assurée par un pivot, une rotule, un joint universel, un maillon, un écrou à billes articulé, ou par toute autre liaison mécanique appropriée. Préférablement l'extrémité de la bielle 70 reliée à l'écrou 68 est guidée longitudinalement de façon à éviter des forces radiales sur la vis sans fin. Dans l'exemple illustré sur les figures le guidage est assuré par la bague 80 glissant à l'intérieur du corps cylindrique 38 de l'outil.

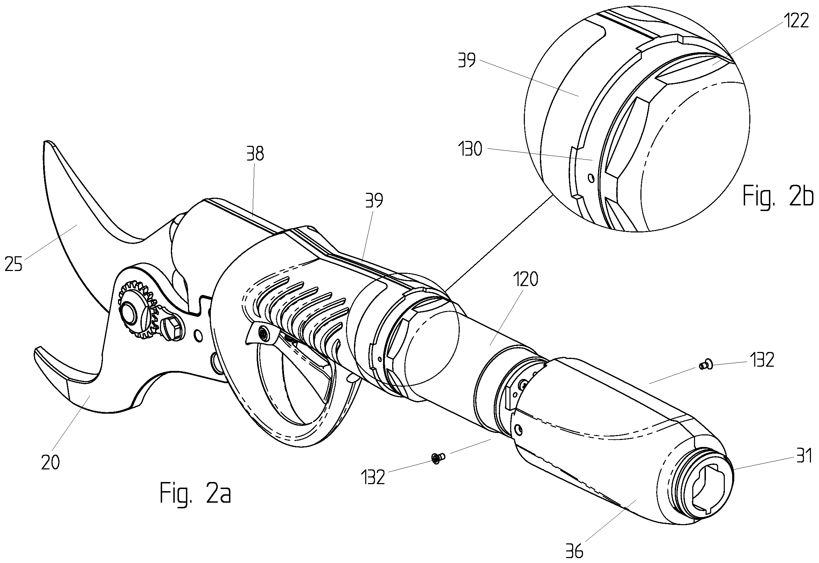

Dans l'assemblage de l'outil de l'invention, l'actionneur comprenant le moteur réducteur 105, l'interface électronique 110, la vis sans fin, l'écrou 68 et la bague de guidage 80 est d'abord assemblé séparément et ensuite inséré par l'ouverture postérieure du corps 38 jusqu'à ce que le collier 107 bute contre l'épaulement 35 du corps 38 visible sur la figure 3a. Une douille de fixation 120 vissée dans le corps 38 appuie sur la face arrière du collier 107 et bloque solidement en place l'actionneur dans sa position. L'actionneur est au moins partiellement entouré latéralement par le corps 38 de l'outil et, pour la partie qui dépasse en arrière, par la douille 120. Préférablement la douille 120 est une pièce métallique, par exemple en acier, de façon à assurer un serrage sûr et protéger le moteur 105 et l'interface 110. Les faces 122, visibles sur la figure 2b permettent la prise de la douille avec une clé et son serrage.

Une fois l'actionneur en place dans le corps du sécateur 38, l'extrémité distale de la bielle 70 dépasse l'ouverture antérieure du corps 38 et peut être fixée de manière articulée à la lame mobile 25, par exemple par l'axe 28 visible sur la figure 3a.

Préférablement, la bague indexée 130, visible sur les figures 1, 3b est interposée entre la douille 120 et le corps 38 et permet de fixer la coque postérieure 36 par les vis 132. Des encoches ou d'autres moyens d'indexation dans le corps 38 définissent la position angulaire de la bague 130 indépendamment de l'angle de vissage de la douille 120, en sorte que les trous destinés à recevoir les vis 123 se trouvent toujours à la même position. Le joint compressible 140 permet la compensation des tolérances des éléments de l'outil. La bague indexée 130 est, par exemple, métallique ou en un matériau synthétique idoine.

### Numéros de référence employés sur les figures

- 20: contre-lame
- 22: axe
- 25: lame ou organe mobile
- 28: articulation
- 30: connecteur
- 35: épaulement
- 36: coque postérieure
- 38: corps cylindrique
- 39: coque antérieure
- 40: gâchette
- 42: garde
- 68: écrou
- 70: bielle
- 80: bague de guidage
- 105: moteur-réducteur
- 107: collier
- 110: interface
- 120: douille
- 122: face
- 130: bague indexée
- 132: vis
- 140: joint compressible
- 31: filetage pour le connecteur

## Revendications

1. Outil électroportatif comprenant: un corps (38) essentiellement de forme tubulaire ; un actionneur au moins partiellement engagé dans le corps (38), ledit actionneur comprenant un élément de fixation solidaire du corps et un élément opératif (68) déplaçable relativement audit élément de fixation, un organe de transmission (70), reliant ledit élément opératif (68) de l'actionneur à un organe mobile (25) de l'outil
dans lequel ledit corps (38) est formé d'une pièce intégrale indémontable entourant latéralement ledit actionneur,
ledit élément de fixation comprenant un collier (107),
ledit outil comprend une douille démontable (120),
dans lequel ledit corps (38) comporte une première ouverture à une extrémité avant de l'outil traversée par ledit organe de transmission (70), dans lequel ledit corps (38) comporte une seconde ouverture fermée par ladite douille démontable (120), laquelle est arrangée pour solidariser ledit actionneur avec le corps (38),
dans lequel ladite douille démontable (120) est arrangée pour être vissée dans ledit corps (38) et pour appuyer sur la face arrière dudit collier (107), afin de solidariser ledit actionneur avec le corps (38),
dans lequel une première partie dudit actionneur est entourée latéralement par ledit corps (38) de l'outil et une deuxième partie dudit actionneur est entourée latéralement par ladite douille démontable (120).

2. Outil selon la revendication 1, dans lequel ladite pièce intégrale indémontable est métallique, ou en aluminium, ou en aluminium forgé, ou en acier, ou en matériaux composites.

3. Outil selon l'une des revendications 1 ou 2, dans lequel ladite douille démontable (120) est une pièce métallique comprenant des faces (122) permettant le serrage de la douille (120) avec une clé.

4. Outil selon revendications 1 à 3 comprenant une bague indexée entre le corps et la douille, permettant la fixation orientée d'une coque.

5. Outil selon l'une des revendications 1 à 4, dans lequel ledit organe mobile (25) est arrangé pour pivoter autour d'un axe (22) fixe relativement au corps (38), ledit actionneur est un actionneur linéaire, comprenant un moteur/réducteur électrique (105) entraînant une vis sans fin, tandis que l'élément opératif (68) est un écrou ou un écrou à billes (68) arrangé pour se déplacer axialement à l'intérieur du corps (38).

6. Outil selon la revendication précédente, comprenant une bielle (70) liée d'une part à l'organe mobile (25) de l'outil et de l'autre part à l'écrou (68).

7. Outil selon la revendication 6, comprenant un maillon ou une articulation lié d'une part à l'organe mobile (25) de l'outil et de l'autre part à l'écrou (68).

8. Outil selon l'une des revendications précédentes, dans lequel ledit organe mobile de l'outil est une lame ou un couteau (25) se déplaçant relativement à une contre-lame (20).

9. Outil électroportatif selon l'une des revendications précédentes, formant un sécateur ou une cisaille.

10. Procédé d'assemblage d'un outil électroportatif selon la revendication 1, le procédé comprenant :
• relier de façon articulée un organe de transmission (70) audit élément opératif (68) de l'actionneur ;
• insérer l'actionneur dans le corps d'outil par l'ouverture postérieure, de façon à ce que l'organe de transmission (70) traverse ladite ouverture antérieure ;
• visser une douille démontable (120) sur l'ouverture postérieure solidarisant l'élément de fixation (107) de l'actionneur avec le corps (38) de l'outil, de façon à ce que la douille démontable (120) appuie sur la face arrière d'un collier (107), afin de solidariser ledit actionneur avec le corps (38), une première partie dudit actionneur étant entourée latéralement par ledit corps (38) de l'outil et une deuxième partie dudit actionneur étant entourée latéralement par ladite douille (120) ;
• relier de façon articulée l'organe de transmission (70) audit organe mobile (25) de l'outil.

11. Procédé selon la revendication précédente, dans lequel ledit organe mobile de l'outil est une lame ou un couteau (25) se déplaçant relativement à une contre-lame (20) et l'outil électroportatif est un sécateur ou une cisaille.

12. Procédé selon la revendication 11, dans lequel l'organe de transmission (70) est une bielle, ou un maillon.

## Patentansprüche

1. Tragbares Elektrowerkzeug, das Folgendes umfasst:
einen Körper (38), der im Wesentlichen rohrförmig ist;
einen Aktor, der wenigstens teilweise in dem Körper (38) in Eingriff ist, wobei der Aktor ein mit dem Körper fest verbundenes Befestigungselement und ein relativ zu dem Befestigungselement verlagerbares Arbeitselement (68) enthält, und ein Kraftübertragungsorgan (70), das das Arbeitselement (68) des Aktors mit einem beweglichen Organ (25) des Werkzeugs verbindet, wobei:
der Körper (38) aus einem einzigen, nicht zerlegbaren Teil gebildet ist, der den Aktor seitlich umgibt, das Befestigungselement einen Kragen (107) aufweist, das Werkzeug eine zerlegbare Hülse (120) aufweist,
wobei der Körper (38) eine erste Öffnung an einem vorderen Ende des Werkzeugs aufweist, durch den das Kraftübertragungsorgan (70) verläuft, und der Körper (38) eine durch die zerlegbare Hülse (120) verschlossene zweite Öffnung aufweist, wobei die Hülse dafür ausgelegt ist, den Aktor mit dem Körper (38) fest zu verbinden,
wobei die zerlegbare Hülse (120) dafür ausgelegt ist, in den Körper (38) geschraubt zu werden und sich an der hinteren Fläche des Kragens (107) abzustützen, um den Aktor mit dem Körper (38) fest zu verbinden, und
wobei ein erster Teil des Aktors seitlich von dem Körper (38) des Werkzeugs umgeben ist und ein zweiter Teil des Aktors seitlich von der zerlegbaren Hülse (120) umgeben ist.

2. Werkzeug nach Anspruch 1, wobei das einzige, nicht zerlegbare Teil aus Metall, entweder Aluminium oder geschmiedetes Aluminium oder Stahl, oder aus Verbundwerkstoffen gebildet ist.

3. Werkzeug nach einem der Ansprüche 1 oder 2, wobei die zerlegbare Hülse (120) ein metallisches Teil ist, das Flächen (122) aufweist, die das Einspannen der Hülse (120) mit einem Schlüssel ermöglichen.

4. Werkzeug nach den Ansprüchen 1 bis 3, das zwischen dem Körper und der Hülse einen indexierten Ring aufweist, der die orientierte Befestigung einer Schale ermöglicht.

5. Werkzeug nach einem der Ansprüche 1 bis 4, wobei das bewegliche Organ (25) dafür ausgelegt ist, sich um eine in Bezug auf den Körper (38) feste Achse (22) zu drehen, wobei der Aktor ein geradliniger Aktor ist, der einen Elektromotor/Untersetzer (105) enthält, der eine Endlosschraube antreibt, während das Arbeitselement (68) eine Mutter oder eine Kugelmutter (68) ist, die dafür ausgelegt ist, sich in dem Körper (38) axial zu verlagern.

6. Werkzeug nach dem vorhergehenden Anspruch, das eine Kurbelstange (70) enthält, die einerseits mit dem beweglichen Organ (25) des Werkzeugs und andererseits mit der Mutter (68) verbunden ist.

7. Werkzeug nach Anspruch 6, das einen Glied oder ein Gelenk, der bzw. das einerseits mit dem beweglichen Organ (25) des Werkzeugs und andererseits mit der Mutter (68) verbunden ist, umfasst.

8. Werkzeug nach einem der vorhergehenden Ansprüche, wobei das bewegliche Organ des Werkzeugs eine Klinge oder ein Messer (25) ist, das sich relativ zu einer Gegenklinge (20) verlagert.

9. Tragbares Elektrowerkzeug nach einem der vorhergehenden Ansprüche, das eine Baumschere oder eine Handschere bildet.

10. Verfahren zum Montieren eines tragbaren Elektrowerkzeugs nach Anspruch 1, wobei das Verfahren Folgendes umfasst:
- Verbinden auf angelenkte Weise eines Kraftübertragungsorgans (70) mit dem Arbeitselement (68) des Aktors;
- Einsetzen des Aktors in den Körper des Werkzeugs durch die hintere Öffnung, derart, dass das Kraftübertragungsorgan (70) durch die vordere Öffnung verläuft;
- Schrauben einer zerlegbaren Hülse (120) auf die hintere Öffnung, um das Befestigungselement (107) des Aktors an den Körper (38) des Werkzeugs zu befestigen, derart, dass sich die zerlegbare Hülse (120) auf der hinteren Fläche eines Kragens (107) abstützt, um den Aktor an dem Körper (38) zu befestigen, wobei ein erster Teil des Aktors seitlich von dem Körper (38) des Werkzeugs umgeben ist und ein zweiter Teil des Aktors seitlich von der Hülse (120) umgeben ist;
- Verbinden auf angelenkte Weise des Kraftübertragungsorgans (70) mit dem beweglichen Organ (25) des Werkzeugs.

11. Verfahren nach dem vorhergehenden Anspruch, wobei das bewegliche Organ des Werkzeugs eine Klinge oder ein Messer (25) ist, die bzw. das sich relativ zu einer Gegenklinge (20) verlagert, und wobei das tragbare Elektrowerkzeug eine Baumschere oder eine Handschere ist.

12. Verfahren nach Anspruch 11, wobei das Kraftübertragungsorgan (70) eine Kurbelstange oder ein Glied ist.

## Claims

1. Portable electric tool comprising: a body (38) of substantially tubular shape; an actuator at least partially engaged in the body (38), said actuator comprising a fixing element secured to the body and an operating element (68) displaceable relative to said fixing element, a transmission member (70) connecting said operating element (68) of the actuator to a movable member (25) of the tool,
in which
said body (38) is formed from an integral part that cannot be disassembled, laterally surrounding said actuator,
said fixing element comprising a collar (107),
said tool comprises a removable sleeve (120),
wherein said body (38) has a first opening at a front end of the tool through which said transmission member (70) passes,
wherein said body (38) has a second opening closed by said removable sleeve (120), which is arranged to secure said actuator to the body (38),
wherein said removable sleeve (120) is arranged to be screwed into said body (38) and to rest on the rear face of said collar (107), in order to secure said actuator to the body (38),
wherein a first portion of said actuator is laterally surrounded by said tool body (38) and a second portion of said actuator is laterally surrounded by said removable sleeve (120).

2. Tool according to claim 1, wherein said integral part that cannot be disassembled is made of metal, or of aluminum, or of forged aluminum, or of steel, or of composite materials.

3. Tool according to one of claims 1 or 2, wherein said removable sleeve (120) is a metal part comprising faces (122) allowing the sleeve (120) to be tightened with a wrench.

4. Tool according to claims 1 to 3 comprising an indexed ring between the body and the sleeve, allowing the oriented fixing of a shell.

5. Tool according to one of claims 1 to 4, wherein said movable member (25) is arranged to pivot about an axis (22) fixed relative to the body (38), said actuator is a linear actuator, comprising an electric motor/gearbox (105) driving a worm screw, while the operating element (68) is a nut or a ball nut (68) arranged to move axially inside the body (38).

6. Tool according to the preceding claim, comprising a connecting rod (70) connected on the one hand to the movable member (25) of the tool and on the other hand to the nut (68).

7. Tool according to claim 6, comprising a link or an articulation connected on the one hand to the movable member (25) of the tool and on the other hand to the nut (68).

8. Tool according to one of the preceding claims, wherein said movable member of the tool is a blade or knife (25) moving relative to a counter-blade (20).

9. Portable electric tool according to one of the preceding claims, forming a pruning shears or shears.

10. Method of assembling a portable electric tool according to claim 1, the method comprising:
- articulately connecting a transmission member (70) to said operating element (68) of the actuator;
- inserting the actuator into the tool body through the rear opening, so that the transmission member (70) passes through said front opening;
- screwing a removable sleeve (120) on the rear opening securing the fixing element (107) of the actuator to the body (38) of the tool, so that the removable sleeve (120) rests on the rear face of a collar (107), in order to secure said actuator to the body (38), a first part of said actuator being surrounded laterally by said body (38) of the tool and a second part of said actuator being surrounded laterally by said sleeve (120);
- articulately connecting a transmission member (70) to the movable member (25) of the tool.

11. Method according to the preceding claim, wherein said movable member of the tool is a blade or knife (25) moving relative to a counter-blade (20) and the power tool is a pruning shears or shears.

12. Method according to claim 11, wherein the transmission member (70) is a connecting rod, or a link.
